# EUROPEAN PATENT APPLICATION

(11) **EP 2 559 575 A1**
(43) Date of publication of application: **20.02.2013**
(21) Application number: 11768687.3
(22) Date of filing: 10.03.2011
(51) Int. Cl.: B60H 3/06, B60H 1/34, B61D 27/00

(54) **VEHICLE**

(30) Priority: 08.07.2010 JP 2010155341; 16.04.2010 JP 2010094944
(71) Applicant: Sharp Kabushiki Kaisha, Osaka-shi, Osaka 545-8522 (JP)
(72) Inventor: KIYOHARA, Hiroaki, Osaka 545-8522 (JP); KATAOKA, Yasutaka, Osaka 545-8522 (JP); HARADA, Shigeyuki, Osaka 545-8522 (JP)
(74) Representative: Treeby, Philip David William
(86) International application number: PCT/JP2011/055572
(87) International publication number: WO 2011/129166

(57) **Abstract**

Provided is a vehicle capable of increasing a concentration of ions in a vehicle without increasing the number of ion generators installed. The vehicle (1000) includes: a plurality of air-conditioning air blow-off outlets (500) and air blow-off outlets of ion generators (100). The plurality of air-conditioning air blow-off outlets (500) are configured such that in the air-conditioning air blow-off outlet (500), among the air-conditioning air blow-off outlets (500), which is located such that an air current blown off from the air-conditioning air blow-off outlet (500) intersects or neighbors an air current blown off from the air blow-off outlet (500) of the ion generator (100), a speed of the air current blown off from the air-conditioning air blow-off outlet (500) is made lower than a speed of an air current blown off from the other air-conditioning air blow-off outlet (500).

## Description

### TECHNICAL FIELD

The present invention relates generally to vehicles, and, more particularly, to a vehicle, such as a railroad vehicle and a bus, which includes blow-off outlets for blowing off air to condition the air in the vehicle.

### BACKGROUND ART

Passengers having been exposed to dirty outside air come in to and go out from a variety of vehicles such as a railroad vehicle and a bus. It is often the case that the passengers boarding such a vehicle bring bacteria, pollen, dust and the like included in the outside air into the vehicle. In particular, on a rainy day or the like, shoes, umbrellas, and the like of the passengers boarding the vehicle are brought in the vehicle with the shoes, the umbrella, and the like being wet. Therefore, a floor surface of the vehicle comes to be in a state where the bacteria, the pollen, the dust, and the like as well as rainwater accumulate thereon.

The bacteria, the pollen, the dust, and the like are invisible and minute and in general, move while floating in air. The bacteria, the pollen, the dust, and the like freely fall with the passage of time and finally drop so as to reach the floor surface or the ground. Therefore, the vicinity of the floor surface of the vehicle is extremely filled with the bacteria, the pollen, the dust, and the like. Although depending on an environmental condition inside the vehicle, the bacteria after having fallen easily propagate, and a multitude of bacteria may inhabit the floor surface of the vehicle. In particular, since on the rainy day, the floor surface of the vehicle is often wet, the floor surface of the vehicle comes to be under a perfect condition for the propagation of the bacteria.

As described above, on the floor surface of the vehicle and in the vicinity of the floor surface, the multitude of the bacteria, the pollen, the dust, and the like are present. These bacteria and the like, for example, adhere to the passengers boarding the vehicle, whereby it is very highly likely that an adverse influence is exerted on the passengers.

In order to solve these problems, Japanese Patent Application Laid-Open Publication No. 2006-69427 (hereinafter, referred to as Patent Literature 1) has proposed an ion control vehicle. The ion control vehicle includes a plurality of chairs; positive/negative ion generators for releasing ions from back surfaces of any of the plurality of chairs; rotation shafts for changing directions of any of the plurality of chairs; direction sensors for detecting the directions of the chairs changed by the rotation shafts; control parts for determining whether or not each first chair, which is any of the plurality of chairs, faces a back surface of each second chair positioned in a front of the first chair and generating the ions by each of the positive/negative ion generators by comparing the directions of the chairs with each other and for controlling the ion generators such that the ions are released from the back face of said each second chair when each of the control parts determines that said each first chair faces the back face of said each second chair; and a traveling part.

However, the ion control vehicle disclosed in Patent Literature 1 is operable to eliminate the bacteria by releasing the ions from the back face of the seat and using the ions. In this case, although the released ions easily reach a portion higher than a seating face of each of the seats, it is likely that the ions do not reach the vicinity of the floor surface where the largest number of bacteria are present (propagating). In other words, although the ions reach the passengers sitting in the seats, a few ions reach the floor surface as a source where the bacteria are propagating and an effect to eliminate the bacteria is small. In addition, there arises the below-described problem: although the ion control vehicle disclosed in Patent Literature 1 is applicable to a railroad vehicle, such as the Shinkansen (bullet train), in which seats are located so as to be arranged in a traveling direction, the ion control vehicle disclosed in Patent Literature 1 is not applicable to a railroad vehicle, such as the conventional railway line, in which seats are arranged so as to face each other in a right and left direction.

In order to solve these problems, Japanese Patent Application Laid-Open Publication No. 2009-126349 (hereinafter, referred to as Patent Literature 2) has proposed a vehicle provided with ion generators below seats. This vehicle is a vehicle in which a plurality of seats including each first seat and each second seat are arranged. The first seat includes: a first positive/negative ion generator, located below the first seat, for generating positive/negative ions; a first suction inlet which communicates with the first positive/negative ion generator; a first blow-off outlet, formed below the first seat, which communicates with the first positive/negative ion generator; and a first blower, located on a path extending from the first suction inlet to the first blow-off outlet, for sending air from the first suction inlet to the first blow-off outlet. The second seat includes: a second positive/negative ion generator, located below the second seta, for generating positive/negative ions; a second suction inlet which communicates with the second positive/negative ion generator; a second blow-off outlet, formed below the second seat, which communicates with the second positive/negative ion generator; and a second blower, located on a path extending from the second suction inlet to the second blow-off outlet, for sending air from the second suction inlet to the second blow-off outlet. The first blow-off outlet is opened toward the second suction inlet.

### CITATION LIST

### PATENT LITERATURE

Patent Literature 1: Japanese Patent Application Laid-Open Publication No. 2006-69427
Patent Literature 2: Japanese Patent Application Laid-Open Publication No. 2009-126349

### SUMMARY OF THE INVENTION

### TECHNICAL PROBLE

In the vehicle disclosed in Patent Literature 2, air containing a multitude of positive/negative ions generated by the positive/negative ion generator can be evenly supplied to the floor surface and the vicinity of the floor surface where a multitude of bacteria, pollen, dust, and the like are present. By means of the air containing the multitude of the positive/negative ions generated by the positive/negative ion generator, the bacteria, pollen, dust, and the like being present on the floor surface between the first seat and the second seat and in the vicinity of the floor surface are eliminated or inactivated. As a result, the air in the vehicle can be efficiently purified. In addition, the vehicle disclosed in Patent Literature 2 is applicable to the railroad vehicle, such as the Shinkansen (bullet train), in which the seats are located so as to be arranged in the traveling direction and also to the railroad vehicle, such as the conventional railway line, in which the seats are arranged so as to face each other in the right and left direction.

In the ion control vehicle disclosed in Patent Literature 1, the ion generators are provided on the back faces of the seats. In addition, in the vehicle disclosed in the Patent Literature 2, the ion generators are provided below the seats. Therefore, in each of the vehicles disclosed in Patent Literature 1 and Patent Literature 2, in order to spread the ions throughout the whole of the vehicle, it is required to provide all of the seats with the ion generators, and thus, the number of ion generators provided is large, thereby leading to a problem in that cost is increased.

It is considered that ion generators are provided on an inside upper wall face of a vehicle or a baggage rack thereof, instead of being provided in the respective seats. In this case, air blow-off outlets of air conditioners are provided on the inside upper wall face of the vehicle, and when air for air-conditioning is blown off in directly downward directions from the air blow-off outlets, air containing ions blown off from the ion generators is blocked by air currents of the air for air-conditioning. Therefore, it is made impossible to spread off ions having a high concentration blown off from the ion generators across people sitting in the seats in the vehicle.

In addition, it is considered that the air for air-conditioning is caused to contain ions having a high concentration blown off from the above-mentioned ion generators. In this case, the ions are spread evenly in the vehicle. Therefore, a concentration of the ions in the whole of the vehicle is reduced.

Accordingly, even in the case where the ion generators are provided on the inside upper wall face of the vehicle or the baggage rack thereof, in order to increase the concentration of the ions in the vehicle, it is required to increase the number of the ion generators installed, thereby leading to the problem in that cost is increased.

Therefore, an object of the present invention is to provide a vehicle capable of increasing a concentration of ions in a vehicle without increasing the number of ion generators installed.

### SOLUTION TO PROBLEM

A vehicle according to the present invention includes: a plurality of first blow-off outlets and a plurality of second blow-off outlets. The plurality of first blow-off outlets are provided on an inner wall surface and blow off air to condition the air in the vehicle. The plurality of second blow-off outlets are provided on the inner wall surface and blow off air containing ions. The plurality of first blow-off outlets are configured such that in the first blow-off outlet, among the plurality of first blow-off outlets, which is located such that an air current blown off from the first blow-off outlet intersects or neighbors an air current blown off from the second blow-off outlet, a speed of the air current blown off from the first blow-off outlet is made lower than a speed of an air current blown off from the other first blow-off outlet.

In the vehicle according to the present invention, the speeds of the air currents blown off from the plurality of first blow-off outlets in order to condition the air in the vehicle are not made constant, but the differences in the speeds of the air currents blown off from the plurality of first blow-off outlets are made. The air current of the air containing the ions, blown off from the second air blow-off outlet, intersects or neighbors the air current blown off from the first blow-off outlet whose speed is low. Therefore, the air currents of the air containing the ions are synthesized with the air currents of the air-conditioning air without being blocked by the air currents of the air-conditioning air and can be sent toward seats in the vehicle. This allows the air containing the ions having a high concentration to spread across the people sitting in the seats in the vehicle. Accordingly, without increasing the number of the ion generators installed, the concentration of the ions in the vehicle can be increased.

In the vehicle according to the present invention, it is preferable that the plurality of first blow-off outlets are located on an inside upper wall surface of the vehicle, and the plurality of second blow-off outlets are located on sides of the inside upper wall surface of the vehicle, the sides being located outside the plurality of first blow-off outlets. In addition, it is preferable that an air current blown off from the first blow-off outlet is blown off in a directly downward direction from the inside upper wall surface of the vehicle, and an air current blown off from the second blow-off outlet is blown off in an obliquely downward direction from the inside upper wall surface of the vehicle.

In the case where the first blow-off outlets and the second blow-off outlets are arranged as described above, the above-mentioned operation and effect according to the present invention can be more favorably exhibited.

In the vehicle according to the present invention, it is preferable that the plurality of first blow-off outlets include a plurality of rectangular-shaped holes which are located in two lines so as to line up in a longitudinal direction of the vehicle. In addition, the vehicle according to the present invention further includes a plurality of ion generators, which are located on both sides of the plurality of first blow-off outlets. In this case, the plurality of second blow-off outlets are blow-off outlets which blow off the air containing the ions from the plurality of ion generators.

In the case where the plurality of first blow-off outlets and the plurality of ion generators are arranged as described above, the above-mentioned operation and effect according to the present invention can be more favorably exhibited.

In the above-mentioned case, it is preferable that the plurality of ion generators are located so as to interpose the plurality of rectangular-shaped holes therebetween, so as to face each other in a direction perpendicular to the longitudinal direction of the vehicle, and so as to be spaced apart in the longitudinal direction of the vehicle.

By arranging the plurality of ion generators as described above, regions, in each of which the ions having the high concentration are present, can be formed in a comparatively narrow range in the vehicle.

In addition, in the above-mentioned case, it is preferable that the plurality of ion generators are located so as to interpose the plurality of rectangular-shaped holes therebetween, so as to face each other in a direction obliquely intersecting the longitudinal direction of the vehicle, and so as to be spaced apart from each other in the longitudinal direction of the vehicle.

By arranging the plurality of ion generators as described above, regions, in each of which the ions having the high concentration are present, can be formed in a comparatively wide range in the vehicle.

In the vehicle according to the present invention, it is preferable that each of the plurality of ion generators includes a plurality of blow-off outlets which blow off the air containing the ions in respectively different directions.

In this way, the air containing the ions can be evenly diffused around from the ion generators.

In this case it is preferable that kinds of the ions contained in the air, which are blown off from two neighboring air blow-off outlets among the plurality of air blow-off outlets provided for each of the plurality of ion generators, have polarities which are different from each other.

In this way, the air containing the ions can be evenly diffused around from the ion generators without neutralizing the positive ions and the negative ions.

### ADVANTAGEOUS EFFECTS OF THE INVENTION

According to the present invention, it is made possible to increase a concentration of ions in a vehicle without increasing the number of ion generators installed.

### BRIEF DESCRIPTION OF THE DRAWINGS

Fig. 1 is a side cross sectional view illustrating a basic configuration of a vehicle as an embodiment according to the present invention.
Fig. 2 is a partial top view illustrating a basic configuration of a vehicle as a first embodiment, in which the vehicle in Fig. 1 is viewed from a direction indicated by an arrow II.
Fig. 3 is a partial cross sectional view illustrating a cross section along a longitudinal direction of the vehicle, in which the vehicle in Fig. 2 is viewed from a direction indicated by an arrow III.
Fig. 4 is a partial top view illustrating a basic configuration of a vehicle as a second embodiment, in which the vehicle in Fig. 1 is viewed from a direction indicated by an arrow IV.
Fig. 5 is a partial cross sectional view illustrating a cross section along a longitudinal direction of the vehicle, in which the vehicle in Fig. 4 is viewed from a direction indicated by an arrow V.
Fig. 6 is a perspective view illustrating a form of an air-conditioning air blow-off outlet used in the vehicle as the embodiment according to the present invention.
Fig. 7 is a perspective view illustrating an appearance of an ion generation unit used in the vehicle as the embodiment according to the present invention.
Fig. 8 is a an exploded perspective view in which the ion generation unit shown in Fig. 7 is viewed from a front surface.
Fig. 9 is an exploded perspective view of a main body base of the ion generation unit shown in Fig. 7.
Fig. 10 is an exploded perspective view in which the ion generation unit shown in Fig. 7 is viewed from a back surface.
Fig. 11 is a plan view of a case of the ion generation unit shown in Fig. 7.
Fig. 12 is a plan view of the main body base of the ion generation unit shown in Fig. 7.
Fig. 13 is a plan view of a suction grille of the ion generation unit shown in Fig. 7.
Fig. 14 is a schematic view illustrating an outline of a ventilation path of air in the ion generation unit shown in Fig. 7.
Fig. 15 is a schematic view illustrating an outline of the ventilation path of air in the ion generation unit shown in Fig. 7.
Fig. 16 is a front view of a front panel of the ion generation unit shown in Fig. 7.
Fig. 17 is a cross sectional view of a principal part of each air blow-off port of the ion generation unit shown in Fig. 7.
Fig. 18 is a diagram illustrating one example of air blow-off directions of the ion generation unit shown in Fig. 7.
Fig. 19 is a diagram showing a simulation outcome of a distribution of concentrations of ions in the vehicle according to the first embodiment shown in Fig. 2 and Fig. 3.
Fig. 20 is a diagram showing a simulation outcome of a distribution of concentrations of ions in the vehicle according to the second embodiment shown in Fig. 4 and Fig. 5.
Fig. 21 is a partial top view illustrating a basic configuration of a vehicle as a third embodiment, in which the vehicle in Fig. 1 is viewed from a direction indicated by an arrow IV.
Fig. 22 is a partial cross sectional view illustrating a cross section along a longitudinal direction of the vehicle, in which the vehicle in Fig. 21 is viewed from a direction indicated by an arrow XXII.
Fig. 23 is a diagram showing a simulation outcome of a distribution of concentrations of ions in the vehicle according to the third embodiment shown in Fig. 21 and Fig. 22.

### DESCRIPTION OF EMBODIMENTS

Hereinafter, embodiments of the present invention will be described with reference to the accompanying drawings.

(First Embodiment)

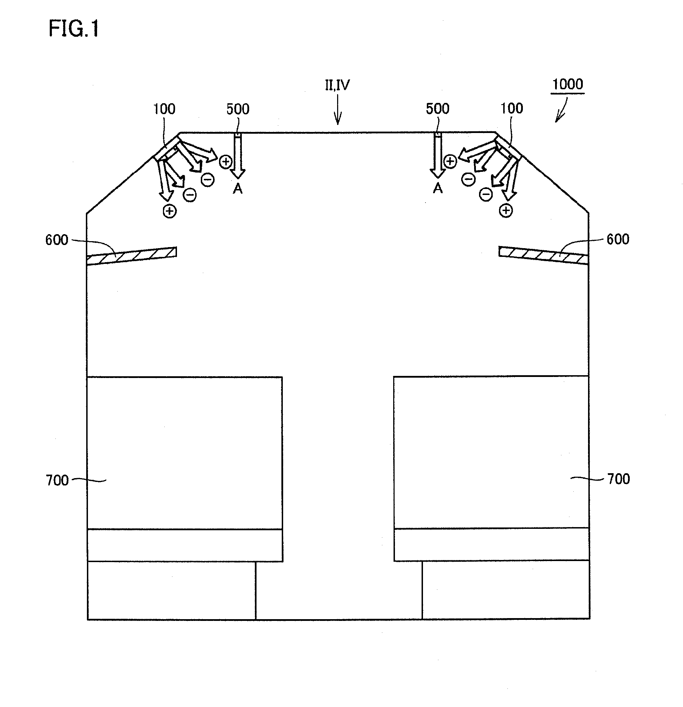

As shown in Fig. 1 through Fig. 3, in a vehicle 1000, a plurality of seats 700 are located so as to be arranged in a traveling direction, that is, a longitudinal direction of the vehicle. In addition, the plurality of seats 700 are arranged in two columns so as to interpose an aisle located in a central portion in a lateral direction of the vehicle 1000 therebetween. Baggage racks 600 are provided on both side wall surfaces of the vehicle 1000. In addition, the baggage racks 600 are positioned above the seats 700 so as to extend along the columns, in which two columns of the seats 700 are provided.

Air-conditioning air blow-off outlets 500 as one example of a plurality of first blow-off outlets are provided on an inside upper wall surface of the vehicle 1000, that is, a ceiling wall surface thereof. In order to condition air in the vehicle 1000, the air is blown off from each of the air-conditioning air blow-off outlets 500. Air currents blown off from the air-conditioning air blow-off outlets 500, as indicated by arrows A, are blown off in directly downward directions from the inside upper wall surface of the vehicle 1000. The air-conditioning air blow-off outlets 500 are located so as to be arranged in the two columns in the longitudinal direction of the vehicle 1000. In the present embodiment, the air-conditioning air blow-off outlets 500 are located in the two columns so as to interpose the aisle located in the central portion in the lateral direction of the vehicle 1000 therebetween. In addition, the air-conditioning air blow-off outlets 500 are composed of a plurality of rectangular-shaped holes, for example, a plurality of slit-like holes, located in two lines. The plurality of slit-like holes are located so as to be spaced apart from one another in the longitudinal direction of the vehicle 1000.

A plurality of ion generators 100 are located on outsides of the air-conditioning air blow-off outlets 500 and on both sides of the inside upper wall surface of the vehicle 1000, that is, both sides of an inclined ceiling wall surface. In order to eliminate floating germs, floating viruses, and the like being present in the air in the vehicle 1000, the air containing the ions is blown off from the air blow-off outlets of the ion generators 100. In the present embodiment, four air blow-off outlets are provided for the ion generator 100 in order to blow off the air containing the ions in respectively different directions. Kinds of ions contained in the air blown off from two neighboring air blow-off outlets among the four air blow-off outlets provided for the ion generator 100 have polarities which are different from each other. In other words, in the present embodiment, the air containing positive ions (+), negative ions (-), positive ions (+), and negative ions (-) in this order along a peripheral direction of each of the ion generators 100 is blown off in four directions from the four air blow-off outlets, as indicated by arrows. Air currents blown off from the air blow-off outlets of the ion generators 100 are blown off in obliquely downward directions from the inside upper wall surface of the vehicle 1000. The air blow-off outlets of the ion generators 100 are one example of the plurality of second blow-off outlets. The details of the ion generators 100 will be described later.

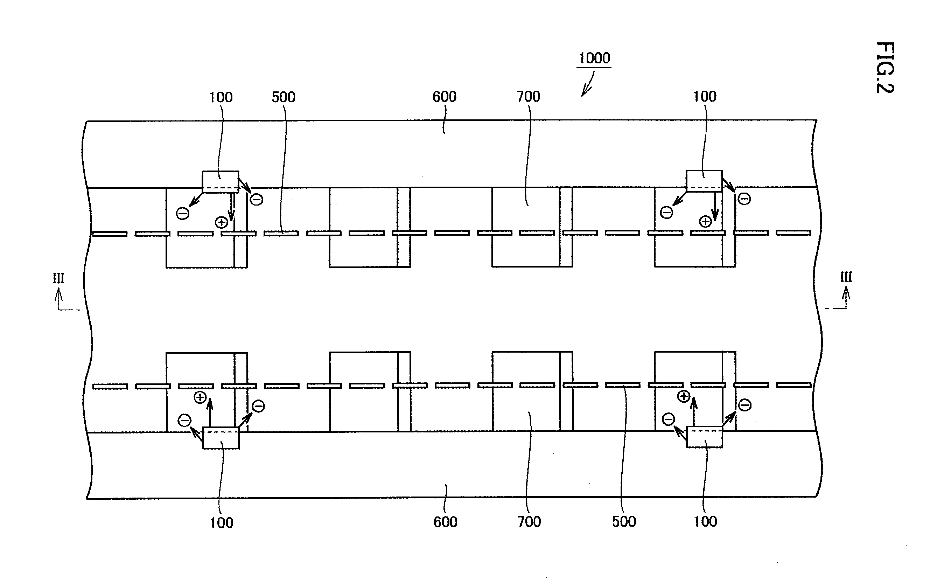

In the present embodiment, as shown in Fig. 2, the two ion generators 100 are located so as to interpose therebetween the air-conditioning air blow-off outlets 500, that is, the plurality of slit-like holes which are arranged in two lines and so as to face each other in a direction perpendicular to the longitudinal direction of the vehicle 1000. In addition, the plurality of ion generators 100 are located side by side so as to be spaced apart in the longitudinal direction of the vehicle 1000.

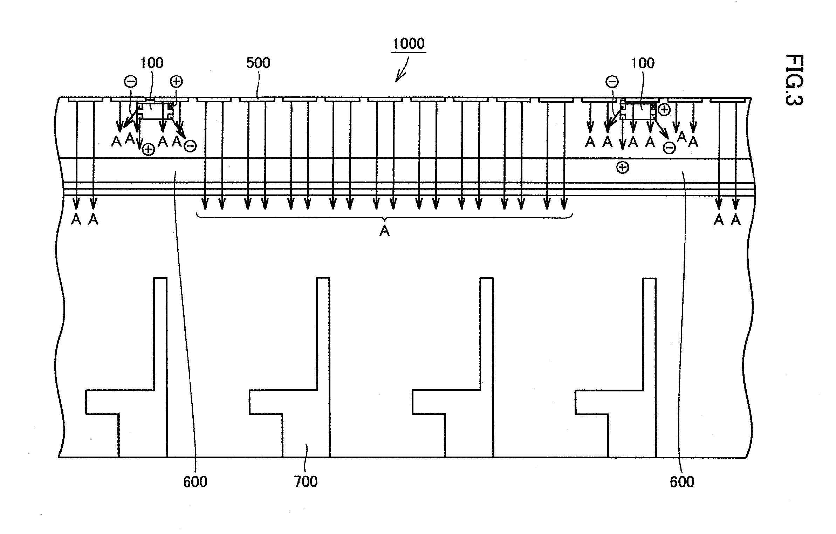

In the vehicle 1000 configured as described above, as shown in Fig. 3, the plurality of air-conditioning air blow-off outlets 500 are configured such that in the air-conditioning air blow-off outlets 500, among the plurality of air-conditioning air blow-off outlets 500, which are located such that air currents (arrows A) blown off from the air-conditioning air blow-off outlets 500 intersect or neighbor air currents (arrows indicated with + and -) blown off from the air blow-off outlets of the ion generators 100, a speed of the air currents (arrows A) blown off from the air-conditioning air blow-off outlets 500 is made lower than a speed of the air current (arrows A) blown off from the other air-conditioning air blow-off outlets 500. In other words, the speed of the air currents (arrows A) blown off from the air-conditioning air blow-off outlets 500 located in the vicinity of the ion generators 100 is lower than the speed of the air currents (arrows A) blown off from the other air-conditioning air blow-off outlets 500. In Fig. 3, these differences in the speeds of these air currents are indicated such that lengths of the arrows A indicating the air currents blown off from the air-conditioning air blow-off outlets 500 located in the vicinity of the ion generators 100 are made shorter than lengths of the arrows A indicating the air currents blown off from the other air-conditioning air blow-off outlets 500.

As described above, in the vehicle 1000 according to the present invention, the speeds of the air currents blown off from the plurality of air-conditioning air blow-off outlets 500 in order to condition the air in the vehicle 1000 are not made constant, but the differences in the speeds of the air currents blown off from the plurality of air-conditioning air blow-off outlets 500 are made. The air currents of the air containing the ions, blown off from the air blow-off outlets of the ion generators 100, intersect or neighbor the air currents blown off from the air-conditioning air blow-off outlets 500, whose each speed is low. Therefore, the air currents of the air containing the ions are synthesized with the air currents of the air-conditioning air without being blocked by the air currents of the air-conditioning air and can be sent toward the seats 700 in the vehicle 1000. This allows the air containing the ions having the high concentration to spread across the people sitting in the seats 700 in the vehicle 1000. Accordingly, without increasing the number of the ion generators installed, the concentration of the ions in the vehicle can be increased.

In addition, in the vehicle 1000 according to the present invention, the air-conditioning air blow-off outlets 500 as the plurality of first blow-off outlets are located on the inside upper wall surface of the vehicle 1000. The air blow-off outlets of the plurality of ion generators 100 as the plurality of second blow-off outlets are located on the sides of the inside upper wall surface of the vehicle 1000, and the sides are located outside the plurality of air-conditioning air blow-off outlets 500. In addition, the air currents blown off from the air-conditioning air blow-off outlets 500 are blown off in the directly downward directions from the inside upper wall surface of the vehicle 1000. The air currents blown off from the air blow-off outlets of the ion generators 100 are blown off in the obliquely downward directions from the inside upper wall surface of the vehicle 1000.

In the case where the air-conditioning air blow-off outlets 500 and the air blow-off outlets of the ion generators 100 are arranged as described above, the above-mentioned operation and effect according to the present invention can be more favorably exhibited.

In the vehicle 1000 according to the present invention, the plurality of air-conditioning air blow-off outlets 500 includes the plurality of rectangular-shaped holes which are located in the two lines so as to line up in the longitudinal direction of the vehicle 1000. In addition, the vehicle 1000 according to the present invention includes the plurality of ion generators 100, which are located on the both sides of the plurality of air-conditioning air blow-off outlets 500.

In the case where the plurality of air-conditioning air blow-off outlets 500 and the plurality of ion generators 100 are arranged as described above, the above-mentioned operation and effect according to the present invention can be more favorably exhibited.

In the case of the present embodiment, the plurality of ion generators 100 are located so as to interpose the plurality of air-conditioning air blow-off outlets 500, that is, the plurality of rectangular-shaped holes therebetween, so as to face each other in the direction perpendicular to the longitudinal direction of the vehicle 1000, and so as to be spaced apart in the longitudinal direction of the vehicle 1000.

By arranging the plurality of ion generators 100 as described above, regions, in each of which the ions having the high concentration are present, can be formed in a comparatively narrow range in the vehicle 1000. Thus, the differences in the concentrations of the ions can be made in a comparatively narrow range in the vehicle 1000. As a result, a sterilizing effect due to the ions having the high concentration can be effectively exhibited in the narrow range.

The sterilizing effect due to the ions, that is, an effect by which floating germs, floating viruses, and the like are eliminated by the ions depends on the concentration of the ions. The higher the concentration of the ions is, the higher the effect is. For example, in terms of performance of eliminating the floating viruses, whereas in a case where a concentration of the ions is 7000 ions/cm³, a survival rate of the floating viruses comes to be 1/100 for 10 minutes, in a case where a concentration of the ions is 50000 ions/cm³, a survival rate of the floating viruses comes to be 1/1000 for 10 minutes. In addition, in terms of an effect of deodorizing cigarette odors adhering to clothing and the like, as compared with a case where an concentration of the ions is 5000 ions/cm³, a deodorizing speed in a case where an concentration of the ions is 20000 ions/cm³ is approximately doubled.

In the vehicle 1000 according to the present invention, each of the plurality of ion generators 100 is provided with the plurality of blow-off outlets for blowing off the air containing the ions in the respectively different directions, thereby allowing the air containing the ions to be evenly diffused around from the ion generators 100. In this case, the kinds of the ions contained in the air, which are blown off from the two neighboring air blow-off outlets among the plurality of air blow-off outlets provided for each of the plurality of ion generators 100, have the polarities which are different from each other, thereby allowing the air containing the ions to be evenly diffused around from the ion generators 100 without neutralizing the positive ions and the negative ions.

(Second Embodiment)

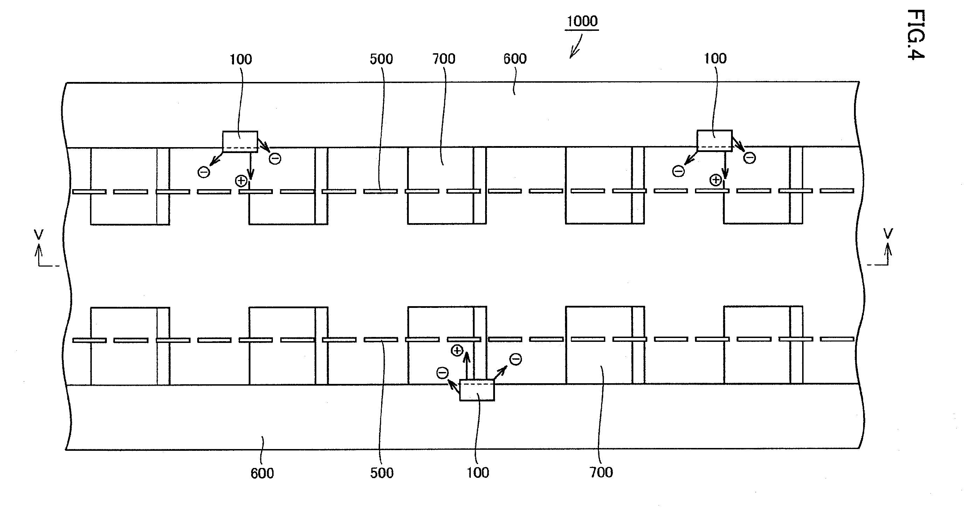

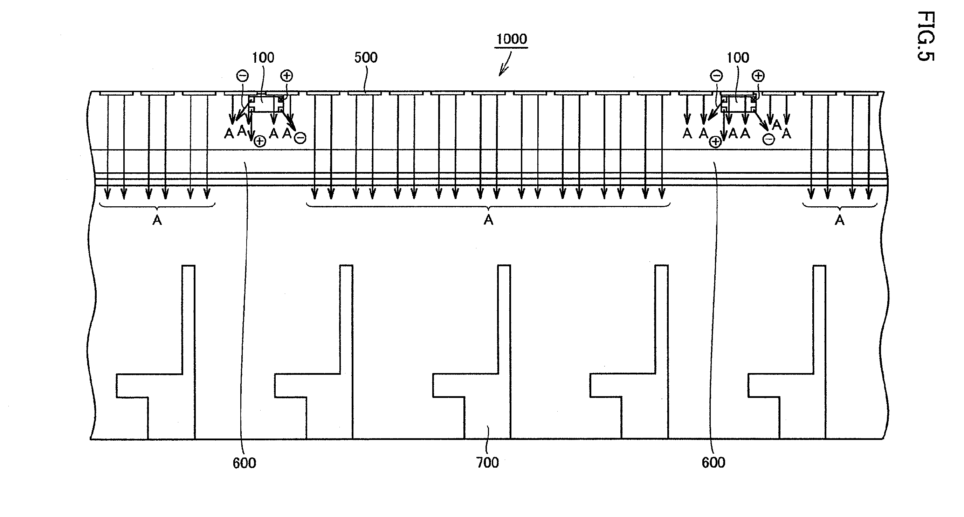

A second embodiment of the vehicle 1000 is shown in Fig. 4 and Fig. 5. As shown in Fig. 4, unlike the first embodiment, in the present embodiment, two ion generators 100 are located so as to interpose therebetween the air conditioning air blow-off outlets 500, that is, the plurality of slit-like holes arranged in two lines and so as to face each other in a direction obliquely intersecting a longitudinal direction of the vehicle 1000. In addition, a plurality of ion generators 100 are arranged so as to be spaced apart from each other in the longitudinal direction of the vehicle 1000. The other configuration of the second embodiment of the vehicle 1000 is the same as that of the first embodiment.

The plurality of ion generators 100 are arranged as described above, thereby allowing regions, in each of which ions having a high concentration are present, to be formed in a comparatively wide range in the vehicle 1000. Thus, differences in concentrations of the ions can be made in the comparatively wide range in the vehicle 1000. As a result, a sterilizing effect due to the ions having the high concentration can be more effectively exhibited in the wide range than the first embodiment.

Also in the second embodiment of the vehicle 1000, the same operation and effect as those of the first embodiment can be obtained.

(Form of Air-conditioning Air Blow-off Outlet)

In the above-described first and second embodiments, as shown in Fig. 3 and Fig. 5, the plurality of air-conditioning air blow-off outlets 500 are configured such that in the air-conditioning air blow-off outlets 500, among the plurality of air-conditioning air blow-off outlets 500, which are located such that air currents (arrows A) blown off from the air-conditioning air blow-off outlets 500 intersect or neighbor air currents (arrows indicated with + and -) blown off from the air blow-off outlets of the ion generators 100, a speed of the air currents (arrows A) blown off from the air-conditioning air blow-off outlets 500 is made lower than a speed of the air current (arrows A) blown off from the other air-conditioning air blow-off outlets 500. A form of each of the plurality of air-conditioning air blow-off outlets 500, which allows the above-described configuration, will be described below.

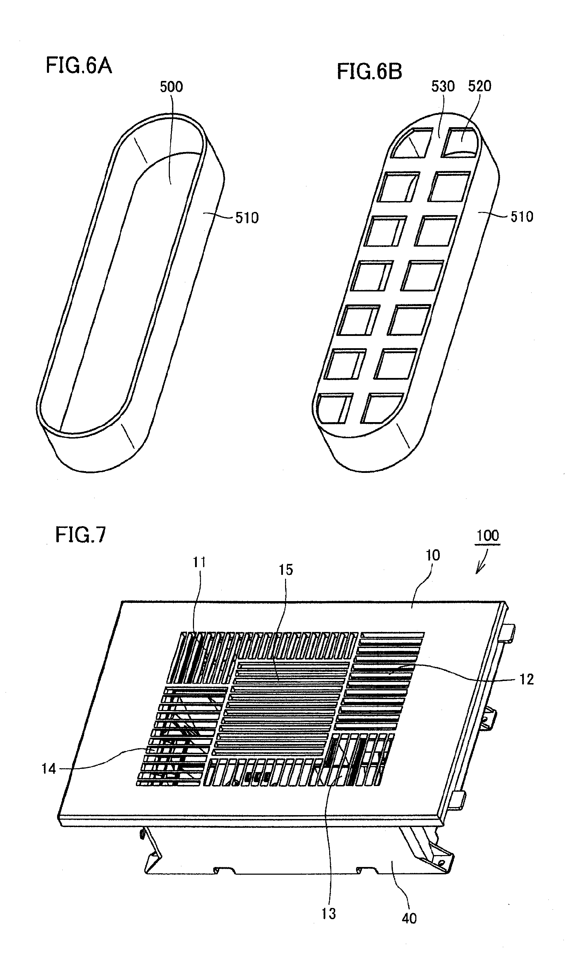

As shown in Fig. 6A, in each of the air-conditioning air blow-off outlets 500, whose speed of the air currents is high, a passage through which the air currents pass is formed only by a peripheral side wall part 510. In this case, since all of the air currents passing though the passage enclosed by the peripheral side wall part 510 are blown off from each of the air-conditioning air blow-off outlets 500, a speed (air volume) of the air currents blown off is increased.

In contrast to this, as shown in Fig. 6B, in each of the air-conditioning air blow-off outlets 500, a plurality of small blow-off holes 520 and a blocking wall part 530 for partitioning an passage, enclosed by the peripheral side wall part 510, through which the air currents pass and for forming a plurality of blow-off holes 520 are formed in the passage. In this case, since a part of the air currents passing through the passage enclosed by the peripheral side wall part 510 is blocked by the blocking wall part 530 and a part of the air currents is blown off from the small blow-off holes 520, a speed (air volume) of the air currents is decreased.

(Embodiment of Ion Generator)

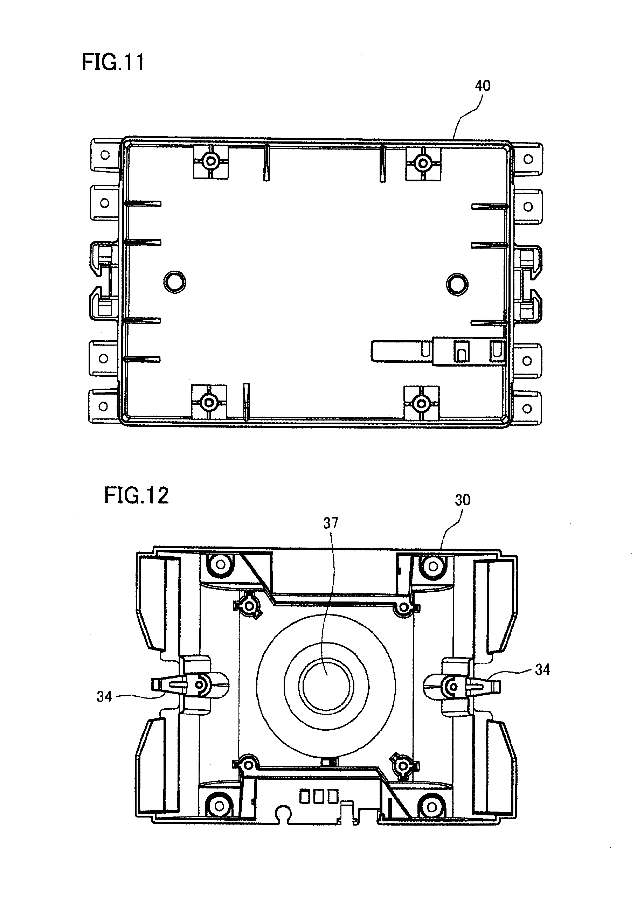

One embodiment of each of the ion generators (ion generation units) 100 provided in the vehicle 1000 according to the first and second embodiments will be described below with reference to Fig. 7 through Fig. 18.

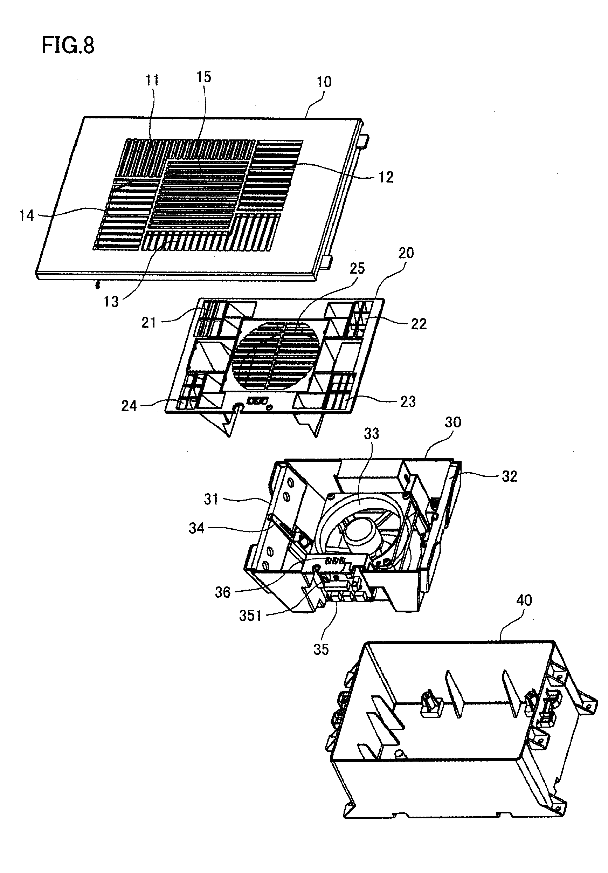

As shown in Fig. 7 and Fig. 8, the ion generation unit 100 includes: a box-like case 40 whose one surface is opened; a box-like main body base 30, housed in the case 40, whose one surface is opened; a suction grille 20 attached on an upper surface (front surface) of the main body base 30; and a front panel 10 as an air guide plate attached on an upper surface (front surface) of the suction grille 20, and the like.

In the front panel 10 of the ion generation unit 100, an air suction port 15 is provided in a central portion thereof. Air blow-off ports 11, 12, 13, and 14 are provided on the same one plane as that on which the air suction port 15 is provided so as to enclose the air suction port 15. Here, as the case where the air suction port and the air blow-off ports are provided on the same one plane, as illustrated in the present embodiment, embraced herein are not only the case where the air suction port and the air blow-off ports are provided on the same one plane, but also, for example, a case where the air suction port and the air blow-off ports are provided on the same one curved plane (for example, a case where the air suction port and the air blow-off ports are provided so as to be inclined toward each other such that a normal direction of the opening surface of the air suction port and normal directions of the opening surfaces of the air blow-off ports form acute angles) and a case where the air suction port and the air blow-off ports are provided on planes which are in parallel with each other (for example, a case where the air suction port and the air blow-off ports are provided such that the opening surface of the air suction port and the opening surfaces of the air blow-off ports have different levels). The air blow-off ports 11 through 14 are located in substantially four corners whose shapes are rectangular so as to enclose the air suction port 15. In addition, on a back surface of the air suction port 15, a filter (not shown) having the substantially same dimensions as those thereof can be attached. This allows dust in the air to be eliminated.

As shown in Fig. 8, on a front surface (upper surface) of the suction grille 20, a suction opening 25 having the substantially same dimensions as those thereof is provided in a position corresponding to that of the air suction port 15. Blow-off openings 21, 22, 23, and 24 each having the same dimensions as those of each of the air blow-off ports 11 through 14 are provided in positions respectively corresponding to those of the air blow-off ports 11 through 14.

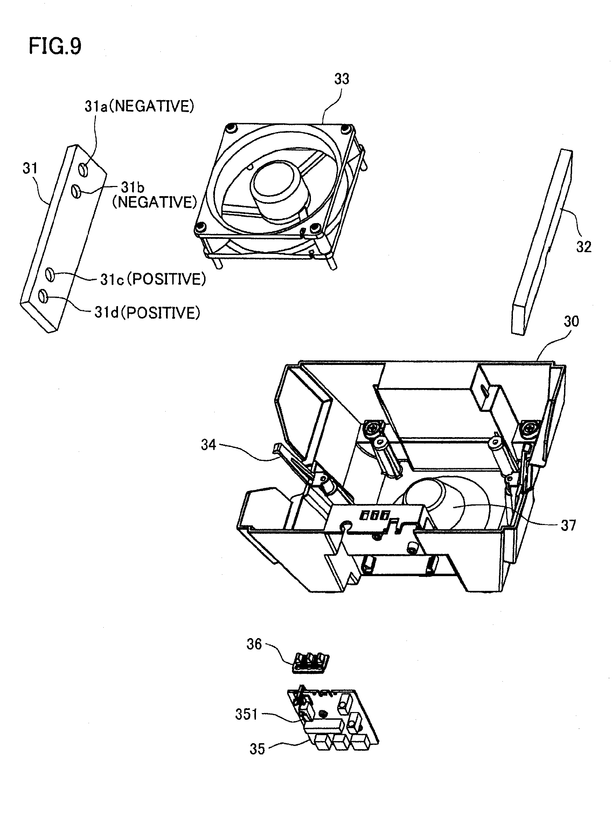

In addition, as shown in Fig. 8 and Fig. 9, in the main body base 30, ion generation elements 31 and 32, a fan 33 including blades, a controller 35 for controlling the ion generation unit 100, a display 36 including LEDs, and the like are attached.

As shown in Fig. 9, the main body base 30 is configured such that the fan 33 can be attached in the central portion thereof. In a portion where the fan 33 is attached, which is a bottom surface of the main body base 30, a narrow-down part 37, which is of a round bowl-shape obtained by narrowing down this part from an outside toward an inside thereof, is formed. In response to the fan 33 being operated, when a flow of the air sucked in from the air suction port 15 hits the bottom surface of the main body base 30, the narrow-down part 37 allows the sucked air to easily flow along the bottom surface of the main body base 30 in a smooth manner, thereby enabling the sucked air to be guided to the air blow-off ports 11 through 14 without causing any disturbance of the air currents.

A couple of side walls of the main body base 30, which face each other, are formed so as to expand and be inclined toward the front surface (upper surface). The above-mentioned respective side walls are provided with the ion generation elements 31 and 32, respectively. The ion generation elements 31 and 32 are pressed against the side walls by fixing plates 34, whose each tip has a latch part formed thereat to be attached thereon. The ion generation elements 31 and 32 are configured so as to be attachable and detachable by means of the fixing plates 34.

Each of the ion generation elements 31 is a plate-like body which is of a rectangular shape. In the vicinity of one end portion of each of the ion generation elements 31, electrode needles 31a and 31b as electrode parts for generating negative ions are provided so as to be spaced at an appropriate distance from each other. In the vicinity of the other end portion of each of the ion generation elements 31, electrode needles 31c and 31d as electrode parts for generating positive ions are provided so as to be spaced at an appropriate distance from each other. With the ion generation elements 31 being attached, in the vicinity of the blow-off openings 21 and the air blow-off ports 11, the ion generation electrode parts for generating the negative ions are located. The air containing the negative ions is blown off from the blow-off openings 21 and the air blow-off ports 11. In addition, with the ion generation elements 31 being attached, in the vicinity of the blow-off openings 24 and the air blow-off ports 14, the ion generation electrode parts for generating the positive ions are located. The air containing the positive ions is blown off from the blow-off openings 24 and the air blow-off ports 14.

Each of the ion generation elements 32 has the same configuration of that of each of the ion generation elements 31. With the ion generation elements 32 being attached, in the vicinity of the blow-off openings 22 and the air blow-off ports 12, the ion generation electrode parts for generating the positive ions are located. The air containing the positive ions is blown off from the blow-off openings 22 and the air blow-off ports 12. In addition, with the ion generation elements 32 being attached, in the vicinity of the blow-off openings 23 and the air blow-off ports 13, the ion generation electrode parts for generating the negative ions are provided. The air containing the negative ions is blown off from the blow-off openings 23 and the air blow-off ports 13.

The ion generation elements 31 and 32 ionize a water vapor in the air through plasma discharge, thereby generating H⁺(H₂O)ₙ (n is any natural number) as the positive ions and O₂-(H₂O)ₘ (m is any natural number) as the negative ions. These chemically react to each other and a hydrogen peroxide (H₂O₂) and/or hydroxyl radicals (OH) as activated species are thereby generated, thus eliminating the floating germs, the floating viruses, and the like in the air.

Since the ion generator is configured as described above, the respective air blow-off ports 11 through 14 can independently blow off the air containing the positive ions or the air containing the negative ions and can prevent the positive ions and the negative ions in the air blown off from the ion generation unit 100 from being directly neutralized. The ions are prevented from being neutralized, thereby allowing diffusibility of the ions to be enhanced.

In addition, the display 36 indicates an operation state (for example, a distinction between an in-operation state and a stop state, high and low levels of a concentration of the generated ions, and the like) of the ion generation unit by means of a lighting-up state of the LEDs. In addition, the controller 35 includes: a microcomputer for controlling the operation of the whole of the ion generation unit 100; a power supply circuit for generating predetermined voltages to be supplied to the ion generation elements 31 and 32 and the fan 33; a microswitch 351 for detecting the attachment and detachment of the front panel 10, and the like.

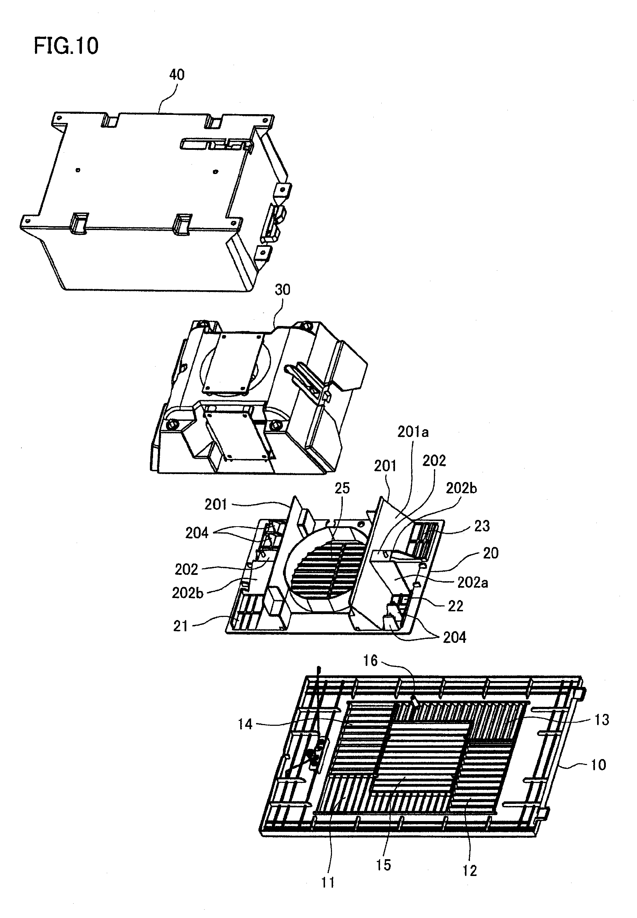

As shown in Fig. 10, a protrusion rod 16 provided on a side of the back surface of the front panel 10 so as to stand presses the microswitch 351, and the microswitch 351 is thereby turned on and detects that the front panel 10 is attached. On the other hand, when the front panel 10 is detached, the protrusion rod 16 comes to be separated from the microswitch 351, and the microswitch 351 is thereby turned off and detects that the front panel 10 is detached. When the front panel 10 is detached, the microswitch 351 is turned off and the ion generation unit 100 comes to be in a state in which the ion generation unit 100 cannot stop the operation or cannot be operated.

As shown in Fig. 10, on a back surface side (rear surface side) of the suction grille 20, ventilation walls 201 and 201 as blow-off direction setting members, each of which has a depth dimension (height) shorter than a depth dimension of the main body base 30, are provided so as to face each other with the suction opening 25 being interposed therebetween. In other words, with the suction grille 20 being attached in the main body base 30, in a space between an inside of the bottom surface of the main body base 30 and the ventilation wall 201, a sufficient gap which is required for the air sucked by the fan 33 to flow is provided.

A side wall of the ventilation wall 201 on the side of the blow-off openings 21 through 24 has an inclined surface (inner surface) 201a as a blow-off direction setting member, which tapers along a depth (height) direction. In a central portion of the ventilation wall 201, a ventilation plate 202 as a blow-off direction setting member is provided so as to be interposed between the blow-off openings 22 and 23. The ventilation plate 202 has the substantially same depth (height) dimension as that of the ventilation walls 201. A side surface of the ventilation plate 202 on sides of the blow-off openings 22 and 23 has inclined surfaces (inner surfaces) 202a and 202b as blow-off direction setting members, each of which tapers along a depth (height) direction. The ventilation plate 202 on sides of the blow-off openings 21 and 24 has the same configuration as described above.

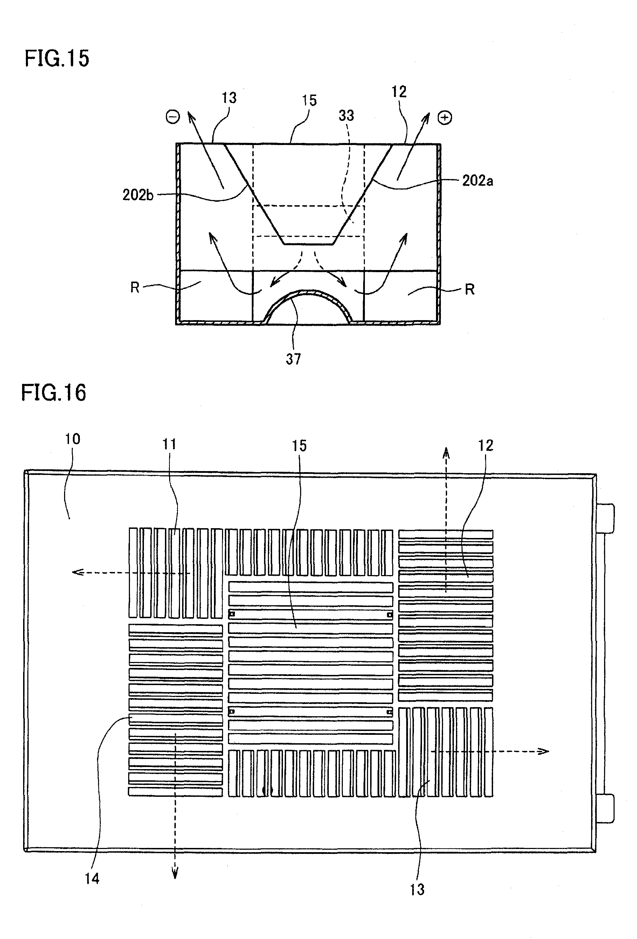

With the suction grille 20 being attached in the main body base 30, the ventilation wall 201 and the ventilation plate 202 form, together with an inner wall (an inside of the bottom surface, an inside of a side surface, and the like) of the main body base 30, a ventilation path R (Fig. 15) for causing the air suction port 15 and the air blow-off ports 11 through 14 to communicate with each other. In the ventilation path R, the fan 33 is attached such that a rotating shaft for the blades of the fan 33 perpendicularly intersects surfaces of the air suction port 15 and the air blow-off ports 11 through 14.

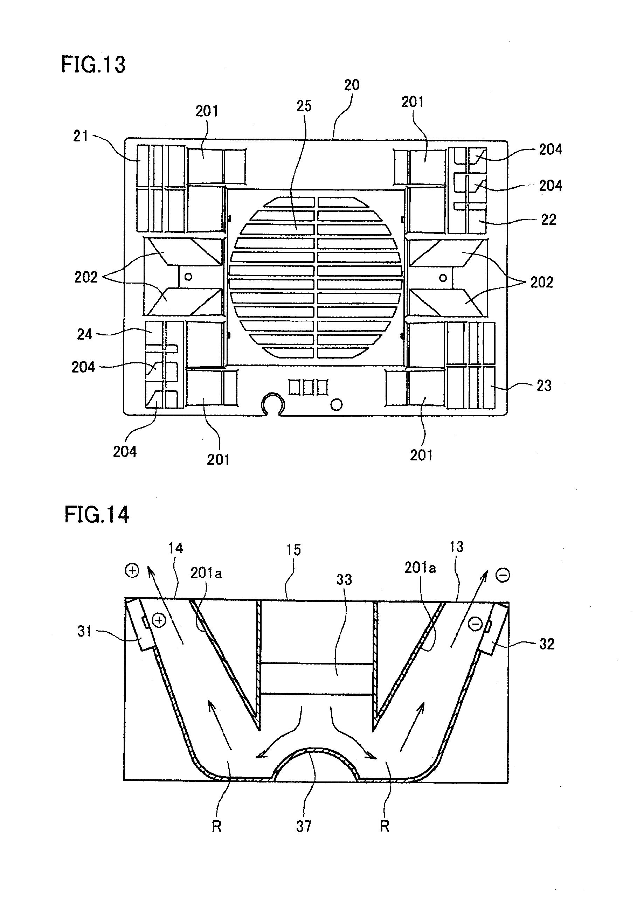

In addition, as shown in Fig. 10 and Fig. 13, on a back side of the blow-off opening 22, current plates 204 and 204 as blow-off direction setting members for setting an air blow-off direction are provided so as to be substantially in parallel with the inclined surface 202a and so as to be spaced at an appropriate distance therefrom. On a back side of the blow-off opening 24, similarly, current plates 204 and 204 for setting a air blow-off direction are provided so as to be substantially in parallel with the inclined surface 202a and so as to be spaced at an appropriate distance therefrom.

Fig. 14 shows a state in which the ion generation unit 100 is viewed from a longitudinal direction. Fig. 15 shows a state in which the ion generation unit 100 is viewed from a lateral direction. As shown in Fig. 14, by causing the fan 33 to operate, the air is sucked in from the air suction port 15. The sucked-in air passes through the ventilation path R via the fan 33 and is blown-off from the air blow-off ports 13 and 14 (the air blow-off ports 11 and 12 are not shown in Fig. 14). In Fig. 14, arrows indicate currents of the air. Upon blowing off the air from the air blow-off port 13, the negative ions generated by the negative ion generation electrode parts of the ion generation element 32 are contained in the air and the air containing the negative ions is blown off. In addition, upon blowing off the air from the air blow-off ports 14, the positive ions generated by the positive ion generation electrode parts of the ion generation element 31 are contained in the air and the air containing the positive ions is blown off.

In addition, the air blown off from each of the air blow-off ports 13 and 14 is diffused in a direction along the inclined surface 201a (direction in parallel with the inclined surface 201a) by the inclined surface 201a which is an inner wall of the ventilation path R. It is preferable that an angle formed between the inclined surface 201a and a surface of each of the air blow-off ports 13 and 14 is approximately 45 degrees. However, the present invention is not limited thereto, and the angle may be approximately 30 through 60 degrees.

In addition, as shown in Fig. 15, by causing the fan 33 to operate, the air is sucked in from the air suction port 15. The sucked-in air passes through the ventilation path R via the fan 33 and is blown off from the air blow-off ports 12 and 13 (the air blow-off ports 11 and 14 are not shown in Fig. 15). In Fig. 15, arrows indicate currents of the air. Upon blowing off the air from the air blow-off ports 12, the positive ions generated by the positive ion generation electrode parts of the ion generation element 32 are contained in the air and the air containing the positive ions is blown off.

The air blown off from each of the air blow-off ports 12 and 13 is each diffused in a direction along each of the inclined surface 202a and 202b (direction in parallel with each of the inclined surface 202a and 202b) by each of the inclined surfaces 202a and 202b, which is an inner wall of the ventilation path R. It is preferable that an angle formed between each of the inclined surface 202a and 202b and a surface of each of the air blow-off ports 12 and 13 is approximately 45 degrees. However, the present invention is not limited thereto, and the angle may be approximately 30 through 60 degrees. In Fig. 14 and Fig. 15, the current plates 204 are not shown.

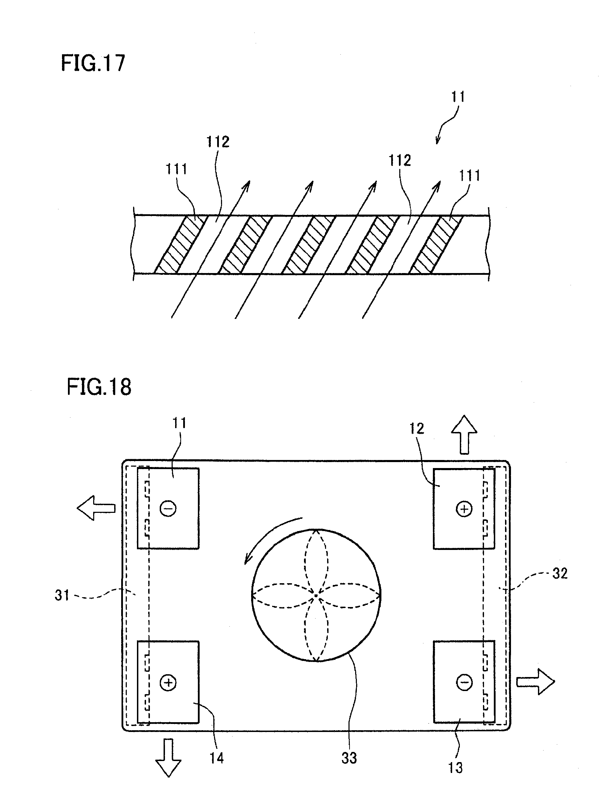

As shown in Fig. 16 and Fig. 17, the air blow-off port 11 of the front panel 10 is formed in a slit-like manner by partition plates 111 as a plurality of blow-off direction setting members in opening parts 112. Thus, the air blow-off port 11 has a function as an air guide plate. In addition, as shown in Fig. 17, the partition plates 111 are formed so as to be inclined along blown-off directions of the air blow-off port 11. As indicated by arrows in Fig. 17, the partition plates 111 can set the blown-off directions of the air. For example, the partition plates 111 are provided so as to be inclined at a predetermined inclination angle (for example, 45 degrees or the like) toward a surface on which the air blow-off port 11 is provided, instead of providing the partition plates so as to form a right angle between the surface on which the air blow-off port 11 is provided and each of the partition plates 111, thereby allowing the directions of blowing off the air containing the ions to be inclined in accordance with the inclinations of the partition plates 111 when the air is blown off from the air blow-off ports 11. This enables diffusibility of the ions to be further enhanced. Each of the other air blow-off ports 12 through 14 has the same configuration as described above.

In Fig. 18, arrows indicate air blow-off directions from the air blow-off ports 11 through 14. As to the air blow-off ports 11, by means of the inclined surface 201a as the inner surface of the ventilation walls 201, the inclined surface 202b of the ventilation plate 202, and the inclinations of the partition plates provided in the air blow-off port 11, the air containing the negative ions is diffused toward an outside of the longitudinal direction of the ion generation unit 100 (left direction in Fig. 18).

As to the air blow-off port 12, by means of the inclined surface 201a as the inner wall of the ventilation walls 201, the inclined surface 202a of the ventilation plate 202, the current plates 204 and 204, and the inclinations of the partition plates provided in the air blow-off port 12, the air containing the positive ions is diffused toward an outside of the lateral direction of the ion generation unit 100 (upward direction in Fig. 18).

As to the air blow-off port 13, by means of the inclined surface 201a as the inner wall of the ventilation walls 201, the inclined surface 202b of the ventilation plate 202, and the inclinations of the partition plates provided in the air blow-off port 13, the air containing the negative ions is diffused toward an outside of the longitudinal direction of the ion generation unit 100 (right direction in Fig. 18).

As to the air blow-off port 14, by means of the inclined surface 201a as the inner wall of the ventilation walls 201, the inclined surface 202a of the ventilation plate 202, the current plates 204 and 204, and the inclinations of the partition plates provided in the air blow-off port 14, the air containing the positive ions is diffused toward an outside of the lateral direction of the ion generation unit 100 (downward direction in Fig. 18).

As described above, in the ion generation unit 100, the plurality of air blow-off ports 11 through 14 are provided around the air suction port 15 so as to be located on the same one plane as that on which the air suction port 15 is located. Thus, the air sucked in from the air suction port 15 located in the central portion thereof becomes the air containing the ions inside the ion generation unit 100 and the air is blown off from the plurality of air blow-off ports 11 through 14 provided around the air suction port 15, thereby enabling the diffusibility of the ions to be enhanced. In particular, even in a case where the ion generation unit 100 is attached on the ceiling or a wall of a room or an inside upper wall surface of the vehicle 1000 (Fig. 1), the plurality of air blow-off ports 11 through 14 are provided, thereby allowing the ions to be efficiently diffused in the room or the vehicle 1000.

In addition, since the air blow-off ports 11 through 14 are provided on the same one plane as that on which the air suction port 15 is located, in the case where the ion generation unit 100 is attached on the ceiling or the wall of a room or the inside upper wall surface of the vehicle 1000 (Fig. 1), surfaces of the air blow-off ports 11 through 14 and the air suction port 15 can be made to be the same one surface as a surface of a ceiling or a wall, thereby avoiding any restriction in that the ion generation unit is required to be installed in a state in which the ion generation unit protrudes from the surface of the ceiling or the wall and thereby making an appearance fine.

As shown in Fig. 18, the blow-off directions of the air blown off from the respective air blow-off ports 11 through 14 along the same one plane can be set to be respectively evenly different directions. In the example shown in Fig. 18, as one example, the air blow-off ports 11 through 14 are located in the positions in the four corners, each of which is of the rectangular shape, and each of the directions of the air blown off from the respective air blow-off ports 11 through 14 and each direction of the air blown off from each neighboring air blow-off port form a substantially right angle. Thus, the ions can be diffused evenly in the four directions from the attachment surfaces of the air blow-off ports 11 through 14 of the ion generation unit 100.

In addition, in the ion generation unit 100, the fan 33 is provided in the inside of the ventilation path. The fan 33 has the blades which rotate about the axis perpendicularly intersecting the surfaces of the air blow-off ports 11 through 14 and the air suction port 15. By causing the fan 33 to operate, the air sucked in from the air suction port 15 passes through the ventilation path R and is blown off from the air blow-off ports 11 through 14. The blow-off directions (directions indicated by arrows (outline arrows) shown in Fig. 18) from the respective air blow-off ports 11 through 14 are set so as to correspond to a rotational direction (direction indicated by an arrow (solid line arrow) shown in Fig. 18) of the blades. For example, as shown in Fig. 18, in a case where the rotational direction of the fan 33 is counterclockwise, the blow-off directions from the respective air blow-off ports 11 through 14 are set to be counterclockwise. Thus, the air containing the ions can be blown off without opposing vortex-like air currents generated by the rotation of the fan 33, thereby enabling the diffusibility of the ions to be enhanced.

(Simulation Outcome of Distribution of Concentration of Ions)

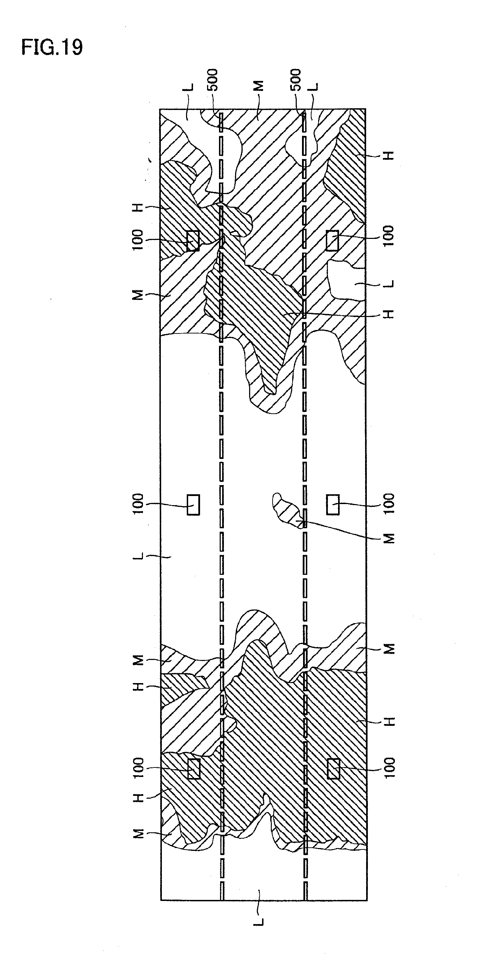

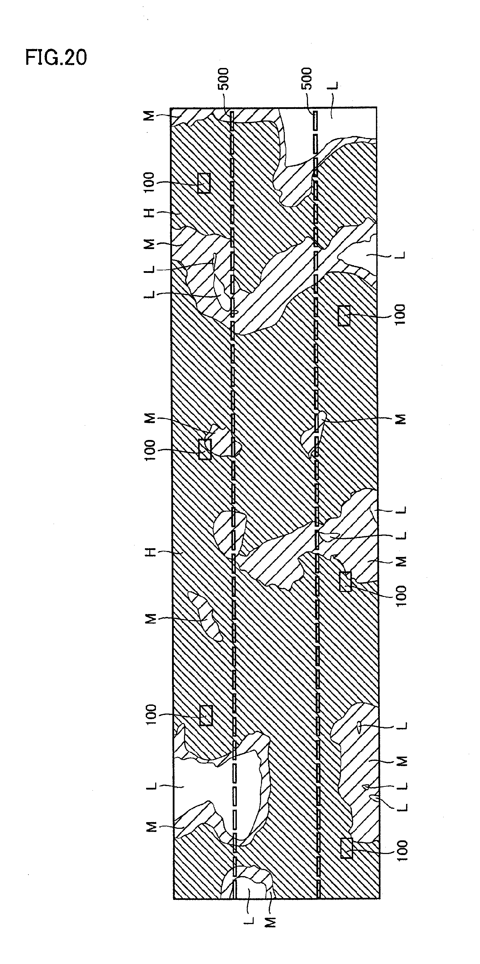

As to the case where the ion generation units 100 shown in Fig. 7 through Fig. 18 are installed in the vehicle 1000 as shown in Fig. 2 and Fig. 3 (first embodiment) and the case where the ion generation units 100 shown in Fig. 7 through Fig. 18 are installed in the vehicle 1000 as shown in Fig. 4 and Fig. 5 (second embodiment), a simulation of a distribution of concentrations of ions, produced by the ions blown off from the ion generation units 100, was performed. A simulation outcome for the first embodiment is shown in Fig. 19, and a simulation outcome for the second embodiment is shown in Fig. 20. In Fig. 19 and Fig. 20, a plane in one vehicle, whose height is 1.2 m from the floor surface of the vehicle (a height at which people sitting in the seats breathe), is shown.

The difference in the speeds of the air currents (arrows A shown in Fig. 3 and Fig. 5) blown off from the air-conditioning air blow-off outlets 500 was set to 2.25 m/s. As shown in Fig. 19 and Fig. 20, six ion generation units 100 were installed in one vehicle. A quantity of ions blown off from each of the ion generation units was set to two million ions/cm³. It was set that the air containing both of the positive ions and the negative ions is blown off from each of the air blow-off ports 11 through 14 of each of the ion generation units 100.

In Fig. 19 and Fig. 20, a region H (densely hatched region) indicates a region in which a concentration of ions is greater than or equal to 20000 ions/cm³; a region M (sparsely hatched region) indicates a region in which a concentration of ions is greater than or equal to 15000 ions/cm³; and a region L (non-hatched region) indicates a region in which a concentration of ions is less than 15000 ions/cm³.

As shown in Fig. 19, a region in which ions having a high concentration are present in a comparatively narrow range in the vehicle 1000 (the region H in which the concentration of ions is greater than or equal to 20000 ions/cm³) can be formed. Thus, the differences in the concentrations of the ions can be made in the comparatively narrow range in the vehicle 1000. As a result, a sterilizing effect due to the ions having the high concentration can be effectively exhibited in the narrow range.

In contrast to this, as shown in Fig. 20, a region in which ions having a high concentration are present in a comparatively wide range in the vehicle 1000 (the region H in which the concentration of ions is greater than or equal to 20000 ions/cm³) can be formed. Thus, the differences in the concentrations of the ions can be made in the comparatively wide range in the vehicle 1000. As a result, a sterilizing effect due to the ions having the high concentration can be effectively exhibited in the wide range.

(Third Embodiment)

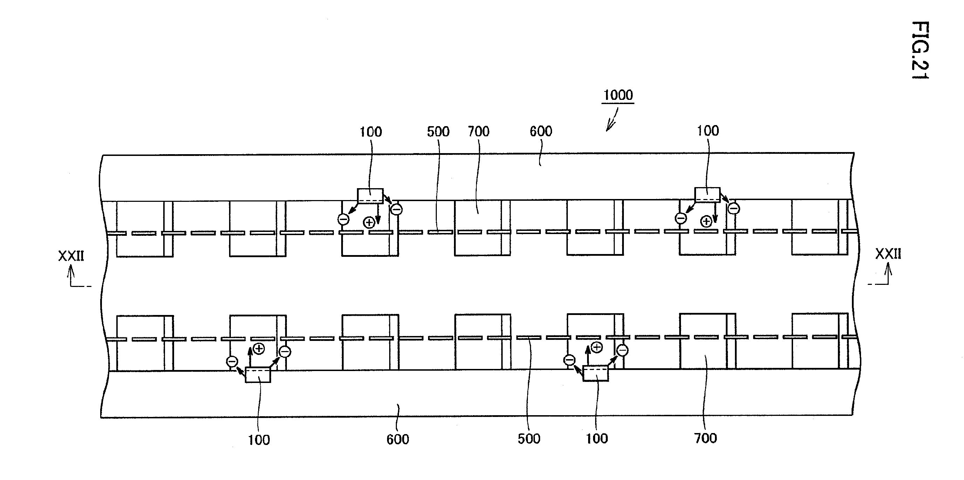

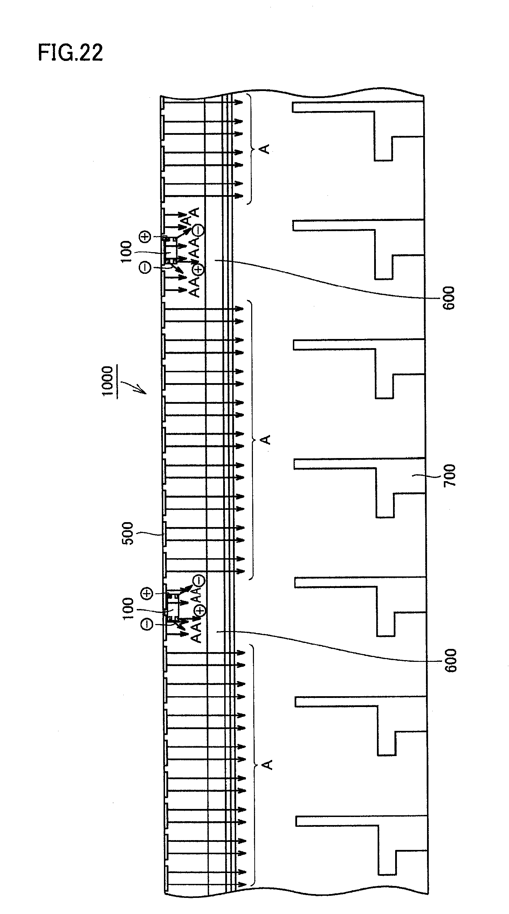

A third embodiment of the vehicle 1000 is shown in Fig. 21 and Fig. 22. As shown in Fig. 21, unlike the first embodiment, in the present embodiment, two ion generators 100 are located so as to interpose a plurality of slit-like holes arranged in two lines and so as to face each other in a direction obliquely intersection a longitudinal direction of the vehicle 1000. In addition, a plurality of ion generators 100 are arranged so as to be spaced apart from each other in the longitudinal direction of the vehicle 1000. All of the ion generators 100 are located so as to be positioned directly above seats 700. The other configuration of the third embodiment of the vehicle 1000 is the same as that of the first embodiment. Also as to a form of the air-conditioning air blow-off outlets 500 in the third embodiment, as in the first and second embodiments, the form shown in Fig. 6 is adopted.

The plurality of ion generators 100 are arranged as described above, thereby allowing regions, in each of which ions having a high concentration are present, to be formed in a comparatively wide range in the vehicle 1000. Thus, differences in concentrations of the ions can be made in the comparatively wide range in the vehicle 1000. As a result, a sterilizing effect due to the ions having the high concentration can be more effectively exhibited in the wide range than the first embodiment.

Also in the third embodiment of the vehicle 1000, the same operation and effect as those of the first embodiment can be obtained.

(Simulation Outcome of Distribution of Concentration of Ions)

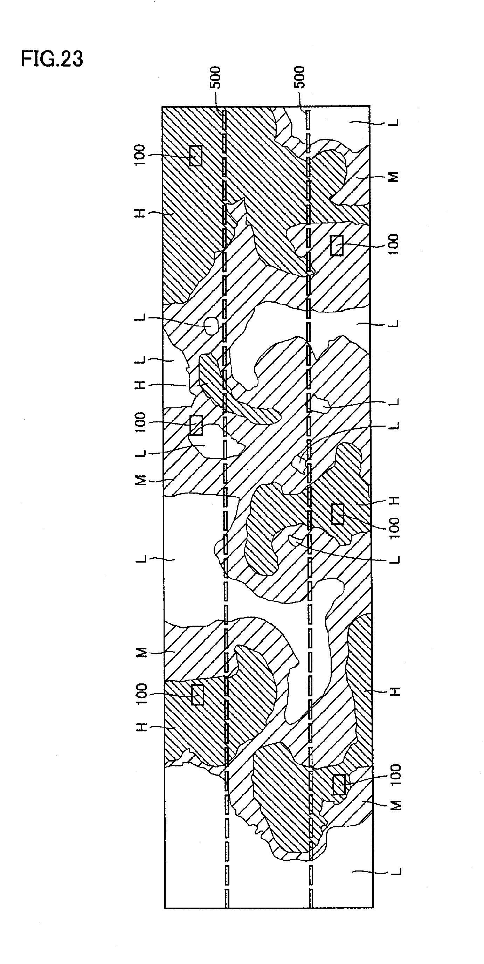

As to the case where the ion generation units 100 shown in Fig. 7 through Fig. 18 are installed in the vehicle 1000 as shown in Fig. 21 and Fig. 22 (third embodiment), a simulation of a distribution of concentrations of ions, produced by the ions blown off from the ion generation units 100, was performed. A simulation outcome for the third embodiment is shown in Fig. 23. In Fig. 23, a plane in one vehicle, whose height is 1.2 m from the floor surface of the vehicle (a height at which people sitting in the seats breathe), is shown.

The difference in the speeds of the air currents (arrows A shown in Fig. 22) blown off from the air-conditioning air blow-off outlets 500 was set to 2.25 m/s. As shown in Fig. 23, six ion generation units 100 were installed in one vehicle. A quantity of ions blown off from each of the ion generation units was set to two million ions/cm³. It was set that the air containing both of the positive ions and the negative ions is blown off from each of the air blow-off ports 11 through 14 of each of the ion generation units 100.

In Fig. 23, a region H (densely hatched region) indicates a region in which a concentration of ions is greater than or equal to 20000 ions/cm³; a region M (sparsely hatched region) indicates a region in which a concentration of ions is greater than or equal to 15000 ions/cm³; and a region L (non-hatched region) indicates a region in which a concentration of ions is less than 15000 ions/cm³.

As compared with the simulation outcome of the distribution of the ions in the vehicle according to the first embodiment shown in Fig. 19, as shown in Fig. 23, a region in which ions having a high concentration are present in a comparatively wide range in the vehicle 1000 (the region H in which the concentration of ions is greater than or equal to 20000 ions/cm³) can be formed. Thus, the differences in the concentrations of the ions can be made in the comparatively wide range in the vehicle 1000. As a result, a sterilizing effect due to the ions having the high concentration can be effectively exhibited in the wide range.

The described embodiments are to be considered in all respects only as illustrative and not restrictive. It is intended that the scope of the invention is, therefore, indicated by the appended claims rather than the foregoing description of the embodiments and that all modifications and variations coming within the meaning and equivalency range of the appended claims are embraced within their scope.

### INDUSTRIAL APPLICABILITY

In a vehicle such as a railroad vehicle and a bus, which has blow-off outlets for blowing off air in order to condition the air in the vehicle, it is made possible to increase a concentration of the ions in the vehicle without increasing the number of ion generators installed.

### REFERENCE SIGNS LIST

100: ion generator (ion generation unit), 500: air-conditioning air blow-off outlet, 1000: vehicle.

## Claims

1. A vehicle (1000) comprising:
a plurality of first blow-off outlets (500) being provided on an inner wall surface and blowing off air to condition the air in the vehicle (1000); and
a plurality of second blow-off outlets being provided on the inner wall surface and blowing off air containing ions,
the plurality of first blow-off outlets (500) being configured such that in the first blow-off outlet (500), among the plurality of first blow-off outlets (500), which is located such that an air current blown off from the first blow-off outlet (500) intersects or neighbors an air current blown off from the second blow-off outlet, a speed of the air current blown off from the first blow-off outlet (500) is made lower than a speed of an air current blown off from the other first blow-off outlet (500).

2. The vehicle (1000) according to claim 1, wherein
the plurality of first blow-off outlets (500) are located on an inside upper wall surface of the vehicle (1000),
the plurality of second blow-off outlets are located on sides of the inside upper wall surface of the vehicle (1000), the sides being located outside the plurality of first blow-off outlets (500),
an air current blown off from the first blow-off outlet (500) is blown off in a directly downward direction from the inside upper wall surface of the vehicle (1000), and
an air current blown off from the second blow-off outlet is blown off in an obliquely downward direction from the inside upper wall surface of the vehicle (1000).

3. The vehicle (1000) according to claim 2, wherein
the plurality of first blow-off outlets (500) include a plurality of rectangular-shaped holes which are located in two lines so as to line up in a longitudinal direction of the vehicle (1000),
the vehicle (1000) further includes a plurality of ion generators (100), which are located on both sides of the plurality of first blow-off outlets (500), and
the plurality of second blow-off outlets are blow-off outlets which blow off the air containing the ions from the plurality of ion generators (100).

4. The vehicle (1000) according to claim 3, wherein the plurality of ion generators (100) are located so as to interpose the plurality of rectangular-shaped holes therebetween, so as to face each other in a direction perpendicular to the longitudinal direction of the vehicle (1000), and so as to be spaced apart in the longitudinal direction of the vehicle (1000).

5. The vehicle (1000) according to claim 3, wherein the plurality of ion generators (100) are located so as to interpose the plurality of rectangular-shaped holes therebetween, so as to face each other in a direction obliquely intersecting the longitudinal direction of the vehicle (1000), and so as to be spaced apart from each other in the longitudinal direction of the vehicle (1000).

6. The vehicle (1000) according to claim 3, wherein each of the plurality of ion generators (100) includes a plurality of blow-off outlets which blow off the air containing the ions in respectively different directions.

7. The vehicle (1000) according to claim 6, wherein kinds of the ions contained in the air, which are blown off from two neighboring air blow-off outlets among the plurality of air blow-off outlets provided for each of the plurality of ion generators (100), have polarities which are different from each other.
